**Europäisches Patentamt**

(19) **European Patent Office**

**Office européen des brevets**

(11) Numéro de publication: **0 123 587**
**B1**

(12) # FASCICULE DE BREVET EUROPEEN

(45) Date de publication du fascicule du brevet:
26.08.87

(51) Int. Cl.⁴: **H 04 L 27/18, H 04 L 27/06**

(21) Numéro de dépôt: **84400604.9**

(22) Date de dépôt: **26.03.84**

(54) **Récupération des fréquences de porteuse et de rythme pour les systèmes de transmission numérique à modulation à états de phase ou d'amplitude et à démodulation cohérente.**

(30) Priorité: **12.04.83 FR 8305942**

(43) Date de publication de la demande:
**31.10.84 Bulletin 84/44**

(45) Mention de la délivrance du brevet:
**26.08.87 Bulletin 87/35**

(84) Etats contractants désignés:
**DE GB IT NL**

(56) Documents cités:
**US - A - 3 919 651**

**THE BELL SYSTEM TECHNICAL JOURNAL, vol. 46, no. 6, juillet/août 1967, pages 1149-1172, New York, US; W.M. HUBBARD: "The effect of intersymbol interference on error rate in binary differentially-coherent phase-shift-keyed systems"**
**IBM JOURNAL OF RESEARCH AND DEVELOPMENT, vol. 3, no. 1, janvier 1959, pages 74-84, New York, US; E. HOPNER: "An experimental modulation-demodulation scheme for high-speed data transmission"**
**1979 ULTRASONICS SYMPOSIUM, 26-28 septembre 1979, New Orleans, Proceedings IEEE, Cat. no. 79CH1482-9, pages 855-861, IEEE, New York, US; J. HENAFF: "Application of saw-oscillators to digital communications"**

(73) Titulaire: **Prigent, Jean-Pierre, rue de Verdun, F-22300 Lannion (FR)**

(72) Inventeur: **Prigent, Jean-Pierre, rue de Verdun, F-22300 Lannion (FR)**

(74) Mandataire: **Cabinet Martinet, 62, rue des Mathurins, F-75008 Paris (FR)**

**Description**

L'invention a trait d'une manière générale aux modems de système de transmission numérique fondés sur une modulation de phase de la porteuse en 2, 4 ou 8 états de phase, bien que l'invention s'applique également à la modulation d'amplitude de la porteuse en plusieurs états d'amplitude.

Plus particulièrement, l'invention concerne un dispositif de récupération des fréquences de porteuse et de rythme pour des transmissions numériques comprenant à l'émission, des moyens recevant un signal binaire, un signal à la fréquence de rythme du signal binaire et une porteuse dont la fréquence P est dans un rapport n prédéterminé avec la fréquence de rythme $1/T$ pour moduler en phase ou en amplitude la porteuse par le signal binaire en un signal de modulation définie par $I = 2^J$ états de phases ou d'amplitude qui correspondent à des combinaisons de J bits successifs du signal binaire modulant, et ayant une fréquence de modulation $1/\tau$ égale à $1/JT$, et à la réception, des moyens comprenant une boucle de verrouillage incluant en série un comparateur de phase, un filtre passe-bas et un oscillateur commandé en tension pour récupérer la fréquence P de la porteuse à partir du signal de modulation en vue de démoduler en phase ou en amplitude le signal de modulation en le signal binaire et de récupérer la fréquence de rythme.

Dans les systèmes de modulation à états de phase et de démodulation cohérente de ce type, la porteuse est produite à l'émission par un oscillateur local dont la phase est indéterminée par rapport au signal de rythme. A la réception, la plupart des moyens de récupération de la porteuse comprennent un multiplicateur de fréquence par I du signal de modulation afin d'éliminer la modulation de phase et récupérer un signal à la fréquence pure IP. Une boucle de verrouillage de phase permet d'asservir un oscillateur commandé en tension à la fréquence IP et de récupérer une porteuse synchrone de la porteuse d'émission après une division en fréquence par I en sortie de la boucle de verrouillage. Cependant, la phase de la porteuse récupérée n'est pas déterminée par rapport au signal de rythme pour procéder à la démodulation du signal reçu. En effet, la phase de la porteuse récupérée à la sortie du diviseur de fréquence s'initialise spontanément à l'une des I phases définies par la modulation.

Pour lever l'ambiguïté de phase à la réception et donc retrouver les suites de bits du signal binaire respectivement en fonction des états de phase correspondants, il est fait appel à un transcodage des J trains binaires correspondant aux bits de même rang dans les suites à J bits du signal binaire. Le transcodage peut être une modulation de phase différentielle (DPSK) ou bien un codage particulier, tel que retard sur l'un des trains binaires ou insertion d'un mot binaire particulier, afin de lever l'ambiguïté de phase dans un transcodeur à la réception. La complexité du transcodeur augmente en fonction du nombre I d'états de phase et affecte au moins la moitié du coût du modem. Le transcodage multiplie également le nombre des erreurs.

La présente invention a pour but de simplifier la composition des modems connus en rendant la porteuse synchrone du signal de rythme à l'émission et par suite, en récupérant à la réception une porteuse dont la phase est cohérente avec le signal de rythme à l'émission. Les transcodages à l'émission et à la réception selon la technique antérieure sont supprimés. Le poids et le coût du modem selon l'invention sont alors réduits et corollairement la fiabilité du modem est augmentée. Le taux d'erreurs est diminué puisque le transcodage qui multiplie les erreurs est supprimé. L'immunité au bruit est améliorée du fait qu'il est possible de réaliser une démodulation cohérente. La récupération de rythme est simplifiée: une seule restitution de rythme est suffisante au lieu de J restitutions de rythme, ce qui améliore le comportement en gigue.

A ces fins, selon l'invention, un dispositif de récupération des fréquences porteuse et de rythme est tel que défini dans la revendication 1.

D'autres caractéristiques et avantages de l'invention apparaîtront plus clairement à la lecture de la description suivante de plusieurs modes de réalisation de l'invention en référence aux dessins annexés correspondants, dans lesquels:

la Fig. 1 est un bloc-diagramme schématique de la partie d'émission d'un dispositif pour transmission à modulation à 4 états de phase selon l'invention;

la Fig. 2 est un diagramme de formes d'onde produites dans la partie d'émission;

la Fig. 3 est un bloc-diagramme schématique de la partie de réception du système de transmission;

la Fig. 4 est un bloc-diagramme du circuit de récupération de la fréquence de porteuse et de la fréquence de rythme selon une première réalisation, inclus dans la partie de réception de la Fig. 3;

la Fig. 5 est un diagramme de formes d'onde produites dans le circuit de récupération de la Fig. 4;

la Fig. 6 est un bloc-diagramme plus détaillé du circuit de récupération de la Fig. 4;

la Fig. 7 est un bloc-diagramme détaillé d'un circuit de récupération de la fréquence de porteuse et de la fréquence de rythme selon une seconde réalisation quelque peu différente de la première;

la Fig. 8 est un bloc-diagramme du circuit de récupération de la fréquence de porteuse et de la fréquence de rythme selon une troisième réalisation; et

la Fig. 9 est un bloc-diagramme du circuit de récupération de la fréquence de porteuse et de la fréquence de rythme selon une quatrième réalisation.

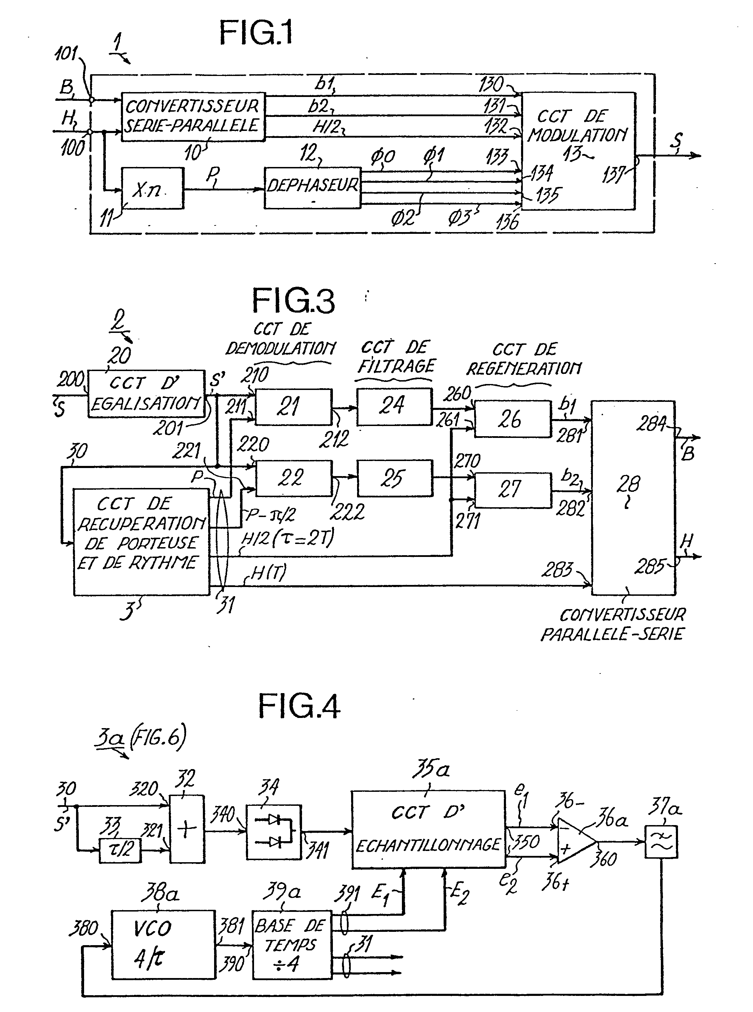

En référence aux Figs. 1 à 5 est décrit un dispositif de récupération des fréquences porteuses et de rythme pour transmission numérique à modulation de phase quadrivalente et à démodulation cohérente.

La partie d'émission 1 du dispositif montrée à la Fig. 1 comprend un convertisseur série-parallèle 10, un circuit de multiplication de fréquence 11, un circuit déphaseur 12 et un circuit de modulation 13.

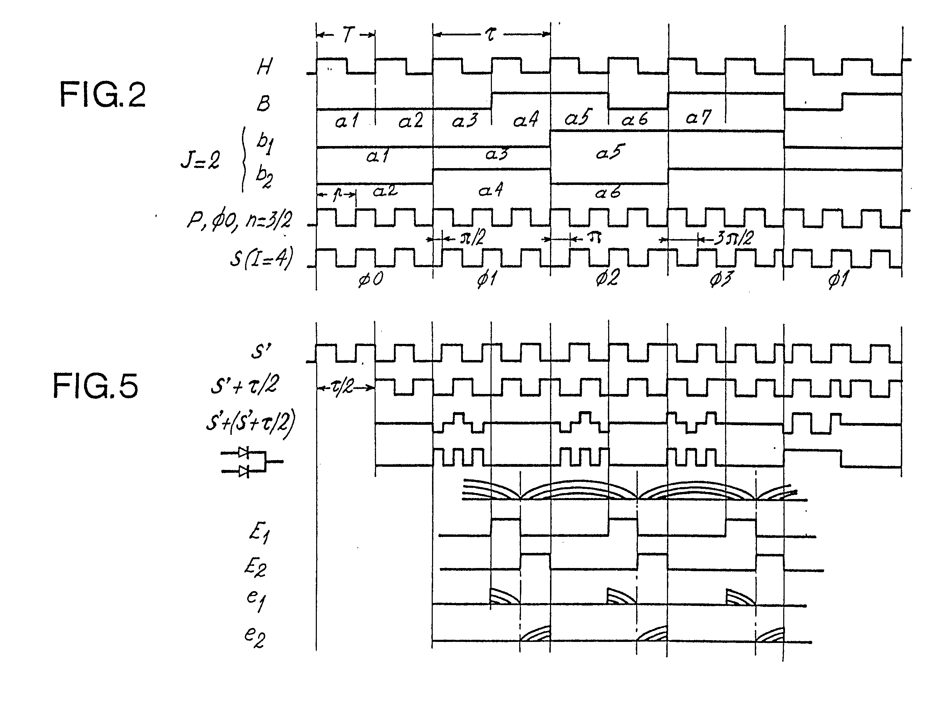

Deux bornes d'entrée 100 et 101 du convertisseur 10 reçoivent en synchronisme un signal d'horloge H et un signal binaire informatif sérialisé B montrés aux première et seconde lignes de la Fig. 2. Le signal d'horloge H a une période de rythme T égale à celle du signal binaire B. Le convertisseur 10 démultiplexe le signal binaire B en deux signaux binaires synchrones b1 et b2 qui correspondent aux bits de rangs impair et pair du signal B comme montré aux troisième et quatrième lignes de la Fig. 2. Chaque bit des signaux $b_1$ et $b_2$ occupe un intervalle élémentaire $\tau$ égal à 2T, appelé période de modulation. Le convertisseur 10 restitue également un signal d'horloge H/2 ayant la période 2T. Les signaux $b_1$, $b_2$ et H/2 sont appliqués à trois entrées 130, 131 et 132 du circuit de modulation 13.

La borne d'entrée 100 est également reliée à une entrée du circuit de multiplication de fréquence 11 qui mutliplie la fréquence 1/T du signal d'horloge H par un facteur n pour restituer une porteuse P à la fréquence n/T. Suivant la valeur du facteur n, le circuit 11 engendre la porteuse P de différentes façons. Lorsque n<1, le circuit 11 est un diviseur de fréquence classique dans lequel la division est réalisée par des circuits logiques. Lorsque n est entier et supérieur à l'unité, le circuit 11 contient un multiplicateur analogique ou une boucle à verrouillage de phase. Lorsque n est fractionnaire et supérieur à l'unité, le circuit 11 contient de préférence une boucle à verrouillage de phase. Dans tous les cas, la porteuse P est engendrée directement à partir du signal d'horloge H et est donc synchrone avec celui-ci. Selon l'exemple illustré, il est présumé, comme montré à la cinquième ligne de la Fig. 2, que le facteur n est égal à 3/2 et que la porteuse P est sous la forme d'un signal d'impulsions de rapport cyclique 0,5. Cependant, la porteuse peut être une onde sinusoïdale. Ainsi selon cet exemple, la période de modulation $\tau$ = 2T est égale à trois périodes p de la porteuse P.

Le circuit déphaseur 12 produit à partir de la porteuse P délivrée par le circuit 11 quatre signaux numérique $\varnothing0$, $\varnothing1$, $\varnothing2$ et $\varnothing3$ qui sont à la même fréquence n/T et qui sont appliqués à quatre entrées 133 à 136 du circuit de modulation 13. Les signaux $\varnothing0$, $\varnothing1$, $\varnothing2$ et $\varnothing3$ sont des signaux issus de la porteuse P et déphasés par rapport à celle-ci de 0, $\pi/2$, $\pi$ et $3\pi/2$ respectivement afin de produire un signal à modulation quadrivalente S dans le circuit 13. Aux quatre paires de bits des signaux $b_1$ et $b_2$ telles que 00, 01, 10 et 11 correspondent dans le signal S des éléments de la porteuse P ayant la durée $\tau$, constitués par les signaux déphasés respectifs $\varnothing0$, $\varnothing1$, $\varnothing2$ et $\varnothing3$. Le signal S à la sortie 137 du circuit de modulation 13 est montré à la dernière ligne de la Fig. 2.

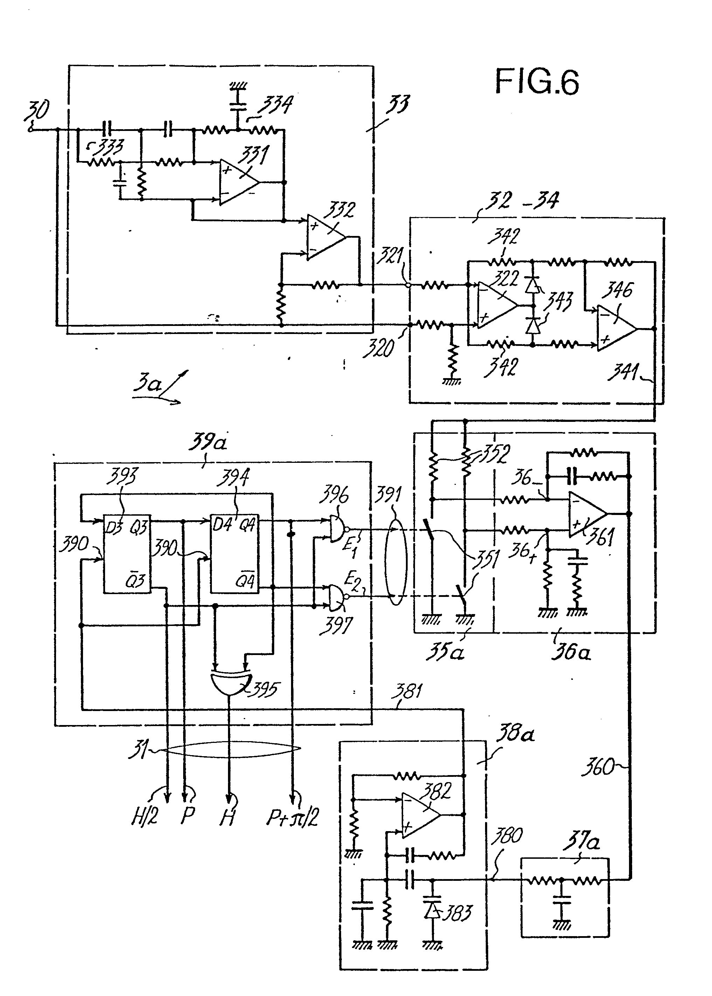

La partie de réception du dispositif est désignée dans son ensemble par 2 dans la Fig. 3. Le signal modulé S transmis par la partie d'émission 1 est reçu à l'entrée 200 d'un circuit d'égalisation 20. Le circuit 20 effectue notamment une compensation de distorsions d'amplitude et de phase dues au moyen de transmission véhiculant le signal S entre les parties 1 et 2, et un filtrage passe-bande et une préamplification du canal dans lequel est transmis le signal S. Le moyen de transmission peut être une liaison par câble ou fibre optique, ou une liaison hertzienne. Le signal égalisé S' délivré par la sortie 201 du circuit 20 est fourni aux entrées 210, 220 de deux circuits de démodulation 21 et 22 et à l'entrée 30 d'un circuit de récupération de la fréquence de porteuse et de la fréquence de rythme 3. Le circuit 3 extrait une porteuse dont la phase est parfaitement connue par rapport à la porteuse produite dans la partie d'émission 1. A partir de la porteuse extraite, un bus de sortie 31 du circuit 3 délivre à deux autres entrées 211, 221 des circuits de démodulation 21, 22 deux porteuses récupérées en quadrature P et P − $\pi/2$ afin que les sorties 212 et 222 des circuits 21 et 22 restituent deux signaux démodulés qui contiennent les informations binaires correspondant aux signaux $b_1$ et $b_2$ traités dans la partie d'émission 1. Les signaux démodulés sont appliqués ensuite à deux circuits de filtrage 24 et 25 qui éliminent les résidus des démodulations et filtrent les signaux démodulés selon le critère de Nyquist. Les signaux sortant des circuits 24 et 25 sont appliqués à des entrées 260, 270 de deux circuits de régénération 26 et 27 dont les autres entrées 261 et 271 reçoivent un signal d'horloge récupéré à la fréquence de modulation $1/\tau = 1/(2T)$ fourni par le bus de sortie 31 du circuit 3. Les signaux binaires $b_1$ et $b_2$ régénérés sont appliqués à deux entrées 281, 282 d'un convertisseur parallèle-série 28 dont une autre entrée 283 reçoit le signal d'horloge H à la fréquence de rythme 1/T fourni par le bus de sortie 31 du circuit 3. Le convertisseur 28 effectue l'opération inverse du convertisseur 10 et produit sur une sortie 284 le signal binaire informatif initial B accompagné du signal d'horloge H sur une autre sortie 285.

Comparativement à la technique antérieure, dans la partie de réception, la porteuse P était produite indépendamment du signal d'horloge, par exemple par un oscillateur local, et n'était donc pas en synchronisme avec le signal d'horloge. Afin de connaître la phase de référence de la porteuse à la réception, la partie d'émission selon la technique antérieure comprenait un transcodeur des signaux binaires $b_1$ et $b_2$ inséré entre les circuits 10 et 13 et permettant une modulation différentielle généralement. Dans la partie de réception selon la technique antérieure, le circuit de récupération de la porteuse ne récupérait que la porteuse sans pouvoir récupérer le signal d'horloge H, puisqu'à partir du signal modulé reçu, une porteuse peut être récupérée par multiplication par 4 puis division par 4 en fréquence sans que sa phase ne soit parfaitement déterminée par rapport à celle de la partie d'émission. Cette indétermination est traduite par un déphasage égal à un multiple entier de $\pi/2$ entre la por-

teuse récupérée et la porteuse dans la partie d'émission. L'ambiguïté de phase due à la reconstitution de la porteuse était alors levée par un transcodeur inséré entre les circuits 26 et 27 et le convertisseur 28. Le signal d'horloge était récupéré à partir des signaux démodulés aux sorties des circuits 24 et 25.

En référence aux Figs. 4 et 5, on décrit maintenant le circuit de récupération de la fréquence de porteuse et de la fréquence de rythme 3a selon une première réalisation. Le signal modulé S' délivré par le circuit 20 à l'entrée 30 est appliqué directement à une première entrée 320 d'un circuit de sommation analogique 32 et à travers un circuit de retard 33 à une seconde entrée 321 du circuit 32. Le circuit de retard 33 impose un retard égal à $\tau/2$ et fournit le signal $S'+\tau/2$ montré à la seconde ligne de la Fig. 5. Le circuit de sommation 32 est supposé être ici un additionneur analogique qui additionne les signaux S' et $S'+\tau/2$ en un signal de sommation $S'+(S'+\tau/2)$ qui est appliqué à l'entrée 340 d'un redresseur à double alternance 34. Comme cela apparaît à la troisième ligne de la Fig. 5, le signal de sommation à l'ntrée 340 du redresseur 34 est un signal à trois niveaux. Dans la première demi-période $\tau/2$ de chaque période de modulation, le signal de sommation résulte de la somme de deux éléments de porteuse déphasés de 0, $\pi/2$, $\pi$ ou $3\pi/2$. Dans la seconde demi-période $\tau/2$ de chaque période de modulation, le signal de sommation résulte de la somme de deux éléments de porteuse déphasés de $\pi$ grâce au circuit de retard 33. Le signal redressé à la sortie 341 du redresseur 34 montré à la quatrième ligne de la Fig. 5 présente ainsi dans les secondes demi-périodes un niveau constant ramené à zéro quelle que soit la suite des éléments de porteuse, c'est-à-dire de la composition du signal binaire initial B. Le niveau zéro est schématisé par un zéro d'énergie dans la cinquième ligne de la Fig. 5 qui est récurrent à la période $\tau$ et dont l'emplacement dans chaque période de modulation $\tau$ est bien déterminé, ici aux trois quarts à partir du début de la période $\tau$.

Cependant, en dépendance du facteur n, le circuit de sommation 32 peut être constitué par un soustracteur analogique sans modifier le principe de la récupération de la porteuse selon l'invention. En effet, dans un intervalle élémentaire de modulation $\tau$ la porteuse P garde une phase constante. Selon que le rapport 2n entre la fréquence de la porteuse P et la fréquence de modulation $1/\tau$ est impair ou pair, il faut respectivement opérer une addition ou une soustraction entre le signal S' et le signal retardé $S'+\tau/2$. Dans ces conditions apparaît un zéro d'énergie de période $\tau$, donc une composante de fréquence $1/\tau$.

Les autres circuits composant le circuit de récupération des fréquences de porteuse et de rythme 3a sont équivalents à une boucle asservie qui a pour but essentiellement de filtrer ou de synthétiser la porteuse à partir du zéro d'énergie périodique à la sortie 341, la phase de la porteuse ainsi filtrée étant parfaitement déterminée par rapport à la phase de référence de la porteuse dans la partie d'émission. A partir de cette porteuse récupérée sont ensuite produits notamment des signaux d'horloge nécessaires à la régénération du signal binaire B.

Lesdits autres circuits précités sont agencés suivant une boucle à verrouillage de phase 35a à 39a selon une première réalisation montrée à la Fig. 4. Un circuit d'échantillonnage 35a reçoit le signal redressé de la sortie 341 du redresseur 34 et échantillonne cleui-ci de part et d'autre des zéros d'énergie sous la commande de signaux logiques d'échantillonnage $E_1$ et $E_2$ fournis sur deux sorties 391 d'une base de temps 39a et montrés aux sixième et septième lignes de la Fig. 5. Les signaux $E_1$ et $E_2$ sont à la période $\tau$ et ont respectivement des impulsions ayant une largeur $\tau/4$ de part et d'autre des zéros d'énergie. Les signaux $E_1$ et $E_2$ sont obtenus à partir de la porteuse récupérée dans la base de temps 39a. Deux sorties 350 du circuit 35a établissent deux signaux d'échantillon $e_1$ et $e_2$ montrés aux deux dernières lignes de la Fig. 5, qui sont appliquées aux entrées $36_-$ et $36_+$ d'un amplificateur différentiel 36a ayant une sortie 360 reliée à un filtre passe-bas 37a. Les signaux $e_1$ et $e_2$ ont une composante continue qui traduit l'écart de phase entre l'onde porteuse établie à la sortie 341 du redresseur montrée à la cinquième ligne Fig. 5, et les signaux $E_1$ et $E_2$ de la base de temps 39a. Le traitement différentiel dans l'amplificateur 36a et le filtrage passe-bas dans le filtre 37a fournissent le signal d'erreur nécessaire au fonctionnement de la boucle asservie. Au total, le circuit d'échantillonnage 35a et l'amplificateur différentiel 36a réalisent un comparateur de phase analogique. Le signal filtré sortant du fitlre 37a est ensuite appliqué à l'entrée de commande 380 d'un oscillateur commandé en tension (VCO) 38a qui oscille à la fréquence $4/\tau$ avec une phase asservie à celle du signal à la sortie 341. Un signal à la fréquence $4/\tau$ à la sortie 381 de l'oscillateur 38a est fourni à l'entrée 390 de la base de temps 39a qui, comme déjà dit, produit les signaux de commande pour l'échantillonnage $E_1$ et $E_2$ et des signaux de porteuse récupérée et de rythme récupéré à des fréquences $1/\tau$, $n/T$, $1/T$ et $2/T$ sur deux sorties 391 reliées au circuit d'échantillonnage 35a et sur le bus 31 relié aux circuits de démodulation 21 et 22, aux circuits de régénération 26 et 27 et au convertisseur parallèle-série 28 (Fig. 3).

On notera que le principe de la récupération de la porteuse selon l'invention, représenté essentiellement par les fonctions des circuits 32, 33 et 34, est applicable à des modulations de phase ou d'amplitude d'un signal numérique quel que soit le nombre d'états de phase ou d'amplitude. Plus précisément, le principe de l'invention s'applique à tout signal modulé produit par la modulation de phase d'une onde porteuse définie par $I = 2^J$ états de phase qui correspondent respectivement aux I combinaisons possibles de J bits successifs du signal binaire B, et s'applique également à tout signal produit par une modulation d'amplitude d'une onde porteuse définie par $I = 2^J$ états d'amplitude qui correspondent respectivement aux I

combinaisons possibles de J bits successifs du signal binaire B. Par exemple, pour quatre états d'amplitude +3, -3, +1 et -1, le signal S' est composé de deux intervalles élémentaires avec une porteuse d'amplitude crête à crête entre -3 et +3 avec deux phases 0 et π et deux intervalles élémentaires avec une porteuse d'amplitude crête à crête entre +1 et -1 avec deux phases 0 et π. Le traitement de la porteuse à la sortie 341 du redresseur est alors indépendant de la modulation de phase ou d'amplitude. Dans la suite, en référence aux Figs. 6 à 9, le signal S' sera indépendamment considéré en modulation de phase ou d'amplitude.

Il est également à noter que la valeur du retard R = τ/2 est très différente du retard égal à τ utilisé pour la démodulation différentielle connue de chacun des signaux $b_1$ et $b_2$.

La Fig. 6 montre la structure détaillée du circuit de récupération de la fréquence de porteuse et de la fréquence de rythme 3a pour une fréquence de rythme 1/T = 152 kHz, un facteur n = 0,5 et donc une fréquence de porteuse P = 76 kHz. La période de modulation est donc τ = 2T = P. Dans la Fig. 6, on retrouve les circuits 32 à 39a sous forme détaillée.

Le circuit de retard 33 est constitué par un filtre passe-tout à deux amplificateurs opérationnels en cascade 331 et 332, et retarde le signal S' de τ/2. L'amplificateur 331 est associé en entrée à une cellule en double T 333 et en contre-réaction à une cellule en T 334.

La sortie de l'amplificateur 332 et l'entrée 30 du circuit de récupération sont respectivement reliées aux deux bornes d'entrée 321 et 320 d'un circuit soustracteur analogique à amplificateur opérationnel 322 inclus dans les circuits 32 et 34. L'amplificateur 322 est prévu avec deux boucles de réaction composées chacune d'un ensemble à une résistance 342 et une diode 343. Les diodes sont montées tête-bêche. Le circuit à amplificateur 322 fonctionne ainsi à la fois en additionneur pour produire le signal de sommation S'+(S'+τ/2) et en redresseur monoalternance. Les signaux redressés aux bornes communes des résistances 342 et des diodes 343 sont alors additionnés dans un additionneur à amplificateur opérationnel 346 qui produit sur sa sortie 341 le signal redressé à double alternance.

Le circuit d'échantillonnage 35a du circuit 3a comprend deux interrupteurs 351. Chaque interrupteur 351 est en série avec une résistance 352 entre la sortie 341 de l'amplificateur 346 du circuit sommateur et redresseur 32-34 et la masse. La borne commune de chaque résistance 352 et de l'interrupteur respectif 351 est reliée à travers une résistance d'entrée à l'une des bornes 36_, 36_+ d'un amplificateur opérationnel 361 inclus dans l'amplificateur différentiel 36a. Les interrupteurs 351 réalisent l'échantillonnage selon le principe des diagrammes aux quatre dernières lignes de la Fig. 5. Le traitement différentiel dans l'amplificateur 361 réalise une comparaison de phase analogique. Le filtrage passe-bas dans les circuits 36a et 37a est prévu avant de refermer la boucle d'asservissement sur l'oscillateur 38a.

L'oscillateur 38a est un oscillateur à pont de Wien comprenant un amplificateur opérationnel 382 et une diode à capacité variable 383 pour l'asservissement à la fréquence 4/τ = 304 kHz. Le signal de fréquence 4/τ à la sortie 381 de l'amplificateur 382 est appliqué aux entrées d'horloge 390 de deux bascules bistables du type D 393 et 394 incluses dans la base de temps 39a. La sortie complémentaire $\overline{Q4}$ de la seconde bascule 394 est reliée à l'entrée D3 de la première bascule 393. La sortie Q3 de la bascule 393 est reliée à l'entrée D4 de la bascule 394. Les signaux de sortie tels que Q3 et Q4 ou $\overline{Q3}$ et $\overline{Q4}$ des deux bascules 393 et 394 sont donc en quadrature et à la fréquence 1/τ = 76 kHz. L'une des entrées de chacune de deux portes NON-ET 396 et 397 incluses dans la base de temps 39a est reliée à la sortie $\overline{Q3}$ de la première bascule 393. Les autres entrées des portes 396 et 397 sont reliées respectivement aux sorties Q4 et $\overline{Q4}$ de la seconde bascule 394. Les sorties 391 des portes 396 et 397 délivrent les deux signaux de commande d'échantillonnage $E_1$ et $E_2$ montrés aux sixième et septième lignes de la Fig. 5 pour commander les deux interrupteurs 351. Les sorties Q3 et Q4 sont reliées aux secondes entrées des circuits de modulation 21 et 22 pour fournir les deux porteuses restituées en quadrature utilisées pour la démodulation. Les sorties $\overline{Q3}$ et $\overline{Q4}$ sont reliées aux entrées d'une porte OU-EXCLUSIF 395 dont la sortie délivre le signal de rythme H à la fréquence 2/τ = 1/T en vue de le transmettre conjointement au signal H/2 à la sortie $\overline{Q3}$ aux entrées 283, 261 et 271 des circuits 28, 26 et 27 (Fig. 3).

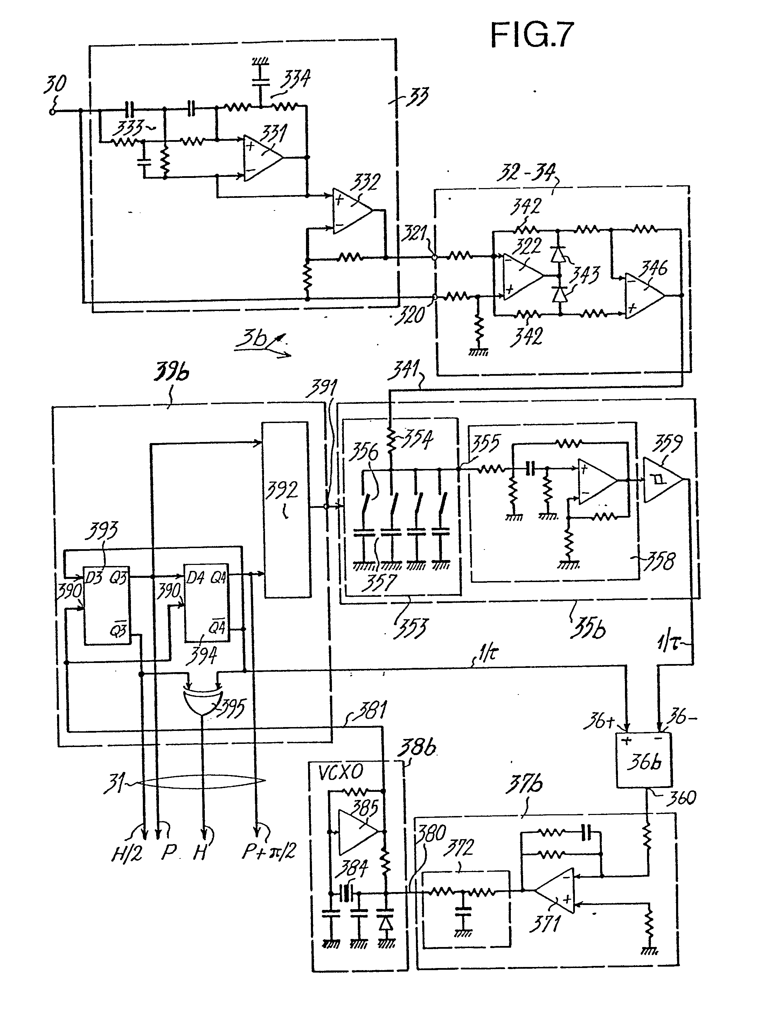

Un second exemple d'un circuit 3b récupérant la fréquence de porteuse et la fréquence de rythme à partir d'un signal modulé en phase ou en amplitude S' est montré en détail à la Fig. 7. La fréquence de rythme 1/T et la fréquence de la porteuse P sont égales à 152 kHz et 76 kHz, comme pour la réalisation illustrée à la Fig. 6. Le circuit 3b comprend à la suite de l'entrée 30 un circuit de retard 33 et un circuit de sommation et de redressement à double alternance 32-34 identiques à ceux déjà décrits en référence à la Fig. 6. Le circuit 3b diffère par rapport au circuit 3a essentiellement par la structure de la boucle d'asservissement 35b-39b qui comprend un comparateur de phase logique 36b équivalent à un opérateur OU-EXCLUSIF.

Le circuit d'échantillonnage 35b est constitué principalement par un filtre passe-bande à capacités commutées 353 à fréquence accordée sur 76 kHz. Le filtre 353 comprend un réseau RC dont la résistance 354 est insérée entre la sortie 341 de l'amplificateur 346 et la borne de sortie 355 du filtre 353 qui est commune à quatre ensembles capacitifs parallèles. Chaque ensemble capacitif est composé d'un interrupteur 356 et d'un condensateur 357 en série entre la borne 355 et la masse. L'échantillonnage à la fréquence 1/τ est obtenu par fermetures successives des quatre interrupteurs 354 pendant une période τ/4. Ces fermetures sont commandées par le bus de sortie 391 d'un décodeur 392 qui est inclus dans la base de temps 39b et qui reçoit des signaux de commande Q3 et Q4 en quadrature à la période τ produits dans la base de temps 39b. La borne de sortie 355 du filtre 353 est reliée à un filtre passe-bande du deuxième ordre à amplificateur opérationnel 358 qui élimine les résidus d'échantillonnage. L'ensemble des filtres 353 et 358 offre une bande passante étroite centrée sur la fréquence de modulation $1/\tau = 76$ kHz, ici égale à la fréquence de la porteuse. Une bascule de Schmitt 359 est prévue entre la sortie de l'amplificateur opérationnel du filtre 358 et une entrée 36_ du comparateur de phase 36b. La bascule 359 remet sous forme d'impulsions le signal filtré à la fréquence de modulation. L'autre entrée 36₊ du comparateur de phase 36b est réliée à la sortie Q4 d'une bascule 394 de la base de temps 39b délivrant un signal à la fréquence de modulation $1/\tau$. La base de temps 39b comprend deux bascules du type D 393 et 394 et une porte OU-EXCLUSIF 395 qui sont agencées de la même manière que dans la base de temps 39a montrée à la Fig. 6.

Le filtre passe-bas 37b comprend un filtre actif à amplificateur opérationnel 371 qui est relié à la sortie 360 du comparateur de phase 36b, et une cellule passe-bas 372 qui est reliée à la sortie de l'amplificateur 371. Le signal d'erreur filtré est appliqué à l'entrée de commande 380 de l'oscillateur 38b qui est du type à oscillateur classique à quartz 384 commandé en tension (VCXO) et à amplificateur opérationnel 385. La sortie 381 de l'amplificateur 385 est reliée aux entrées d'horloge 390 des bascules 393 et 394 de la base de temps 39b.

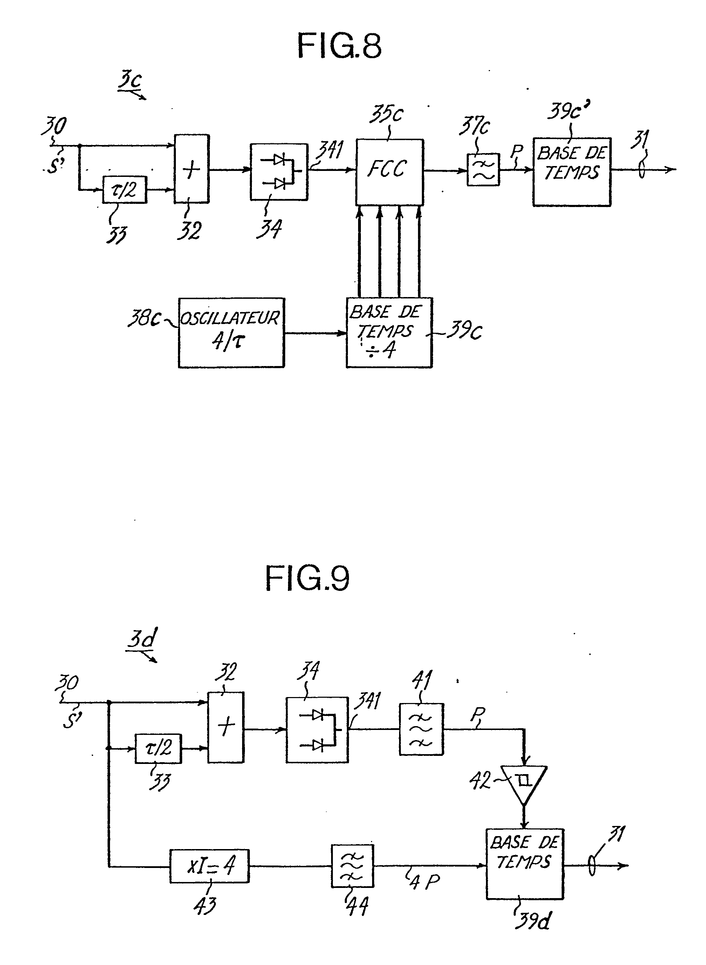

Deux autres modes de réalisation du circuit de récupération de la fréquence de porteuse et de la fréquence de rythme sont décrits en référence aux Figs. 8 et 9. Les circuits de récupération correspondants 3c et 3d sont fondés sur le même principe que celui 3a de la Fig. 4, à savoir une restitution de porteuse par retard, addition et redressement. Les circuits 3c et 3d comprennent donc à partir de l'entrée 30, le circuit de sommation 32, le circuit de retard 33 et le redresseur à double alternance 34 agencés de la même manière que dans le circuit 3a.

En référence à la Fig. 8, la boucle de phase 35a à 39a de la Fig. 4 est remplacée par un oscillateur local 38c, une base de temps 39c à division de fréquence par 4 et un filtre à quatre capacités commutées 35c. L'oscillateur local 38c délivre un signal à la fréquence $4/\tau$. La base de temps 39c divise par quatre la fréquence du signal sortant de l'oscillateur 38c et fournit quatre signaux de commande d'échantillonnage à la fréquence $1/\tau$ et déphasés de $\pi/2$ les uns par rapport aux autres. Le filtre 35c échantillonne le signal redressé en sortie 341 du redresseur 34 sous la commande de la base de temps 39c. Le signal échantillonné sortant du filtre 35c est filtré passe-bas dans un filtre 37c qui restitue la porteuse P à partir de laquelle les signaux nécessaires à la démodulation et les signaux de rythme H et H/2 sont produits dans une base de temps 39c' sur le bus 31. Les circuits 35c, 37c, 38c et 39c sont du même type que ceux 35b, 37b, 38b et 39b montrés en détail à la Fig. 7.

Dans le dispositif de la Fig. 8, l'onde porteuse est directement filtrée. Dans la première réalisation (Fig. 4), il y a synthèse de l'onde porteuse avec un asservissement de phase par rapport au signal à la sortie 341 du redresseur 34; dans ces conditions, un glissement de la phase est toujours possible. Le circuit 3c de la Fig. 8 évite cet inconvénient. Cependant, la production des fréquences de rythme H et H/2 nécessite une seconde base de temps 39c'.

Selon la quatrième réalisation, le circuit de récupération de la fréquence de porteuse et de la fréquence de rythme 3d montré à la Fig. 9 présente deux dérivations.

La première dérivation comprend à partir de l'entrée 30, l'ensemble 32, 33 et 34, un filtre passe-bande à bande étroite 41 et une bascule de Schmitt 42. Le filtre 41 est accordé sur la fréquence P et restitue la porteuse P qui est mise en forme par la bascule 42. Le front montant des impulsions sortant de la bascule 42 cale en phase un diviseur de fréquence par 4 inclus dans une base de temps 39d.

La seconde dérivation comprend à partir de l'entrée 30, un multiplicateur de fréquence 43 par $l = 4$ et un filtre passe-bande 44. Le multiplicateur 43 élimine la modulation de phase dans le signal S' et le filtre 44 restitue un signal pur à la fréquence 4P en fonction duquel la base de temps 39c élabore par division les signaux correspondants sur le bus 31.

La quatrième réalisation présente l'avantage que la base de temps 39d reçoit en permanence un signal à la fréquence IP qui est indépendant de l'état des éléments de modulation dans le signal S', c'est-à-dire de l'état des bits du signal B. Aucune perte de fréquence de rythme n'a lieu dans la base de temps 39d. Au contraire, les circuits de récupération 3a à 3c sont tributaires de la statistique du signal binaire B et plus précisément de longues suites de bits d'un même état binaire qui produisent un niveau d'énergie constant dans le signal redressé (Fig. 5, quatrième et cinquième lignes) qui empêche de reconstituer la porteuse par comparaison de phase et filtrage. Cette perte de rythme est évitée dans le circuit 3d, puisque la porteuse P mise en forme par la bascule 42 ne sert qu'à caler la phase dans la base de temps 39d. La mise en œuvre du circuit 3d ne nécessite pas l'emploi de brouilleur à l'émission et de débrouilleur à la réception pour rendre le signal de modulation pseudo-aléatoire, comme selon la technique antérieure.

**Revendications**

1. Dispositif de récupération des fréquences porteuse et de rythme pour des transmissions numériques comprenant à l'émission (1), des moyens (10, 12, 13) recevant un signal binaire (B), un signal à la fréquence de rythme (H) du signal binaire et une porteuse dont la fréquence (P) est dans un rapport (n) prédéterminé avec la fréquence de rythme 1/T pour moduler en phase ou en amplitude la porteuse par le signal binaire en un signal de modulation (S) défini par I = $2^J$ états de phase ou d'amplitude qui correspondent à des combinaisons de J bits successifs du signal binaire modulant, et ayant une fréquence de modulation (1/τ) égale à 1/JT, et à la réception (2), des moyens (3) comprenant une boucle de verrouillage (35–39) incluant en série un comparateur de phase (36), un filtre passe-bas (37) et un oscillateur commandé en tension (38) pour récupérer la fréquence (P) de la porteuse à partir du signal de modulation (S') en vue de démoduler en phase ou en amplitude le signal de modulation (S') en le signal binaire (B) et de récupérer la fréquence de rythme, caractérisé en ce qu'il comprend à l'émission (1), des moyens (11) pour multiplier en fréquence par le rapport prédéterminé (n) le signal de rythme (H) en la porteuse (P), et en ce qu'à la réception (2), les moyens pour récupérer la porteuse (3) comprennent des moyens (33) pour retarder le signal de modulation d'un retard égal à la moitié de la période de modulation (τ), des moyens (32) pour sommer le signal de modulation (S') et le signal de modulation retardée (S'+τ/2) en un signal de sommation, et des moyens (34) pour redresser à double alternance le signal de sommation en un signal redressé qui a un niveau prédéterminé (niveau «0») dans chaque seconde moitié des périodes de modulation (τ), en vue de l'appliquer à l'entrée (341) de la boucle de verrouillage (35–39).

2. Dispositif conforme à la revendication 1, caractérisée en ce que les moyens pour retarder (33) sont constitués par un filtre passe-tout à deux amplificateurs opérationnels (331, 332).

3. Dispositif conforme à la revendication 1 ou 2, caractérisé en ce que les moyens pour sommer (32) et les moyens pour redresser (34) sont constitués par un amplificateur opérationnel (322) fonctionnant en additionneur ou en soustracteur à deux branches de contre-réaction à diodes pour redressement monoalternance et par un amplificateur opérationnel (346) à entrées reliées aux diodes, fonctionnant en soustracteur.

4. Dispositif conforme à l'une quelconque des revendications 1 à 3, caractérisé en ce que l'entrée de la boucle de verrouillage est constituée par des moyens (35b) pour échantillonner et filtrer passe-bande le signal redressé en un signal à la fréquence de modulation appliqué à une entrée (36₋) du comparateur de phase (36b), en ce que l'oscillateur commandé en tension (38b) oscille à une fréquence multiple de la fréquence de modulation et en ce que la boucle de verrouillage comprend une base de temps (39b) recevant le signal délivré par l'oscillateur (38b) pour produire notamment des signaux de commande (E₁, E₂) pour l'échantillonnage, un signal à la fréquence de modulation appliqué à l'autre entrée (36₊) du comparateur de phase (36b), le signal à la fréquence de rythme (H) et des signaux à la fréquence de la porteuse nécessaires à la démodulation (31).

5. Dispositif conforme à la revendication 4, caractérisé en ce que le comparateur de phase (36b) est remplacé par des moyens (36a) pour traiter différentiellement et filtrer passe-bas les échantillons en vue d'appliquer le signal à la fréquence de modulation (360) à l'entrée dudit filtre passe-bas (37a).

6. Dispositif conforme à l'une quelconque des revendications 1 à 3, caractérisé en ce que la boucle de verrouillage est remplacée par des moyens (35c) pour échantillonner et filtrer passe-bande le signal redressé (34), un oscillateur local (38c) oscillant à une fréquence (4/τ) multiple de la fréquence de modulation (1/τ), des moyens (39c) recevant le signal de l'oscillateur local pour produire des signaux de commande pour l'échantillonnage, des moyens (37c) pour filtrer passe-bas le signal échantillonné en la porteuse récupérée et une base de temps (39c') recevant la porteuse récupérée pour produire notamment le signal de rythme (H) et des signaux à la fréquence de la porteuse nécessaires à la démodulation (31).

7. Dispositif conforme à la revendication 4 ou 6, caractérisé en ce que les moyens pour échantillonner et filtrer passe-bande (35b; 35c) comprennent un filtre passe-bande (353) à capacités commutées (356, 357) de préférence suivi d'un filtre passe-bande de deuxième ordre (358) et d'une bascule de Schmitt (359).

8. Dispositif conforme à l'une quelconque des revendications 1 à 3, caractérisé en ce que la boucle de verrouillage est remplacée par un premier filtre passe-bande (41) filtrant le signal redressé en la porteuse récupérée, des moyens (43) pour multiplier en fréquence par I le signal de modulation (S') en un signal à la fréquence IP, un second filtre passe-bande (44) pour filtrer le signal à la fréquence IP, et une base de temps (39d) calée en phase par la porteuse récupérée délivrée par le premier filtre passe-bande (41) pour produire à partir du signal à la fréquence IP notamment le signal à la fréquence de rythme (H) et les signaux à la fréquence de la porteuse nécessaires à la démodulation (31).

**Patentansprüche**

1. Einrichtung zur Wiedergewinnung der Träger- und Tastfrequenz für digitale Übertragungen, welche an der Sendestation (1) Mittel (10, 12, 13) aufweist, die ein binäres Signal (B), ein Signal von Tastfrequenz (H) des binären Signales und ein Trägersignal empfangen, dessen Frequenz (P) in einem vorgegebenen Verhältnis (n) zu der Tastfrequenz (1/T) steht, um die Phase oder die Amplitude des Trägersignals mit dem Binärsignal zur Bildung eines Modulationssignals (S) mit I = $2^J$ Phasen- oder Amplituden-Zuständen zu modulieren, welche den Kombinationen von J aufeinanderfolgender Bits des modulierenden Binärsignals entsprechen, und das eine Modulationsfrequenz (1/τ) hat, die gleich 1/JT ist, und welche an der Empfangsstation (2) eine Verriegelungsschleife (35–39) umfassende Mittel (3) aufweist, welche in Reihe einen Phasen-Vergleicher (36), ein Tiefpassfilter (37) und einen spannungsgesteuerten Oszillator (38) in Reihe enthält, um die Trägerfrequenz (P) aus dem Modulationssignal (S′) bei einer Phasen- oder Amplitudendemodulation des Modulationssignals (S′) in das Binärsignal (B) sowie die Tastfrequenz zurückzugewinnen, dadurch gekennzeichnet, dass an der Sendestation (1) Multipliziereinrichtungen (11) zur Frequenzmultiplikation des Tastsignals (H) mit dem vorbestimmten Verhältnis (n) in das Trägersignal (P) vorgesehen sind, und dass an der Empfangsstation (2) Wiedergewinnungseinrichtungen für das Trägersignal (3) Verzögerungseinrichtungen (33), die das Modulationssignal um die Hälfte der Modulationsperiode ($\tau$) verzögern, sowie Summiereinrichtungen (32), welche das Modulationssignal (S′) und das verzögerte Modulationssignal (S′+$\tau$/2) zu einem Summensignal addieren, und jeweils Zwei-Halbwellen-Gleichrichtereinrichtungen (34) aufweisen, welche das Summensignal bei seiner Zuführung zu dem Eingang (41) der Verriegelungsschleife (35–39) in ein gleichgerichtetes Signal umsetzen, das einen vorgegebenen Pegel (Pegel «0») in jeder zweiten Hälfte der Modulationsperiode ($\tau$) besitzt.

2. Einrichtung nach Anspruch 1, dadurch gekennzeichnet, dass die Verzögerungseinrichtungen (33) aus einem Bandfilter mit zwei Operationsverstärkern (331, 332) gebildet sind.

3. Einrichtung nach Anspruch 1 oder 2, dadurch gekennzeichnet, dass die Summiereinrichtungen (32) und die Gleichrichtereinrichtungen (34) von einem Operationsverstärker (322) als Addierer oder Subtrahierer mit zwei, Dioden aufweisenden, gegengekoppelten Zweigen zur Einweg-Gleichrichtung, und von einem Operationsverstärker (46) als Subtrahierer gebildet sind, dessen Eingänge mit den Dioden verbunden sind.

4. Einrichtung nach einem der Ansprüche 1 bis 3, dadurch gekennzeichnet, dass der Eingang der Verriegelungsschleife Einrichtungen (35b) aufweist, die das gleichgerichtete Signal abtasten und in ein Signal von Modulationsfrequenz bandfiltern, welches einem Eingang (36_) des Phasenvergleichers (36b) zugeführt ist und dass der spannungsgesteuerte Oszillator (38b) mit einem Vielfachen der Modulationsfrequenz schwingt, und dass die Verriegelungsschleife einen Taktgeber (39b) aufweist, der das vom Oszillator (38b) abgegebene Signal aufnimmt und insbesondere Steuersignale (E$_1$, E$_2$) zur Abtastung, ein auf den anderen Eingang (36$_+$) des Phasenvergleichers (36b) gegebenes Signal von Modulationsfrequenz, das tastfrequente Signal (H) und die trägerfrequenten, zur Demodulation (31) erforderlichen Signale erzeugt.

5. Einrichtung nach Anspruch 4, dadurch gekennzeichnet, dass der Phasenvergleicher (36b) durch Einrichtungen (36a) ersetzt ist, welche beim Zuführen des modulationsfrequenten Signals (360) zu dem Eingang des Tiefpassfilters (37a) die Abtastungen differenziell behandeln und tiefpassfiltern.

6. Einrichtung nach einem der Ansprüche 1 bis 3, dadurch gekennzeichnet, dass die Verriegelungsschleife durch Einrichtungen (35c) zum Abtasten und Tiefpassfiltern des gleichgerichteten Signals (34), einen lokalen Oszillator (38c), der mit einem Vielfachen (4/$\tau$) der Modulationsfrequenz (1/$\tau$) schwingt, Einrichtungen (39c), die das Signal des lokalen Oszillators aufnehmen und Steuersignale für die Abtastung erzeugen, Einrichtungen (37c), welche das abgetastete Signal in ein wiedergewonnenes Trägersignal tiefpassfiltern, sowie einen Taktgeber (39c′) ersetzt ist, der das wiedergewonnene Trägersignal aufnimmt und insbesondere das Tastsignal (H) sowie die zur Demodulation (31) erforderlichen, trägerfrequenten Signale erzeugt.

7. Einrichtung nach Anspruch 4 oder 6, dadurch gekennzeichnet, dass die Einrichtungen zum Abtasten und Tiefpassfiltern (35b; 35c) ein Bandfilter (53) mit umschaltbaren Kapazitäten (356, 357) aufweisen, dem vorzugsweise ein Bandfilter zweiter Ordnung (358) und ein Schmitt-Trigger (359) nachgeschaltet sind.

8. Einrichtung nach einem der Ansprüche 1–3, dadurch gekennzeichnet, dass die Verriegelungsschleife durch ein erstes Bandfilter (41), welches das gleichgerichtete Signal in ein wiedergewonnenes Trägersignal filtert, Multipliziereinrichtungen (43), welche die Frequenz des Modulationssignals (S′) mit I zu einem Signal mit der Frequenz IP multiplizieren, ein zweites Bandfilter (44) zum Filtern des Signals mit der Frequenz IP, und einen Taktgeber (39d) ersetzt ist, der mit dem aus dem ersten Bandfilter (41) kommenden, wiedergewonnenen Trägersignal phasengekoppelt ist und aus dem Signal mit der Frequenz IP insbesondere das Signal von Tastfrequenz (H) sowie die zur Demodulation (31) erforderlichen, trägerfrequenten Signale erzeugt.

**Claims**

1. Device for recovering carrier and clock frequencies in digital transmissions comprising in a transmitting part (1), means (10, 12, 13) receiving a binary signal (B), a signal at the clock frequency (H) of the binary signal and a carrier wave whose frequency (P) is in a predetermined ratio (n) with the clock frequency 1/T for modulating in phase or in amplitude the carrier wave by the binary signal into a modulation signal (S) defined by I = 2$^J$ phase or amplitude states which correspond to combinations of J successive bits of the modulating binary signal, and having a modulation frequency (1/$\tau$) equal to 1/JT, and in a receiving part (2), means (3) comprising a locking loop (35–39) series includig a phase comparator (36), a lowpass filter (37), a voltage controlled oscillator (38) for recovering the carrier wave frequency (P) from the modulation signal (S′) thereby phase or amplitude demodulating the demodulation signal (S′) into the binary signal (B) and recovering the clock frequency, characterized in that it comprises in the transmitting part (1), means (11) for frequency multiplying the clock signal (H) by the predetermined ratio (n) into the carrier wave (P), and in that in the receiving part (2), the carrier wave recovering means (3) comprise modulation signal delaying means (33) by a time delay equal to half the modulation period ($\tau$), means (32) for summing the modulation signal (S') and the delayed modulation signal (S'+$\tau$/2) into a summation signal, and means (34) for full-wave rectifying the summation signal into a rectified signal having a predetermined level (level "0") in each second half of the modulation periods ($\tau$), thereby applying it to the input (341) of the locking loop (35–39).

2. Device according to claim 1, characterized in that the delaying means (33) are composed by an all-pass filter with two operational amplifiers (331–332).

3. Device according to claim 1 or 2, characterized in that the summing means (32) and the rectifying means (34) are composed by an operational amplifier (322) operating as an adder or a substractor having two diode feedback paths for single-wave rectification, and by an operational amplifier (346) having inputs connected to the diodes, operating as a substractor.

4. Device according to any one of claims 1 to 3, characterized in that the locking phase input is constituted by means (35b) for sampling and band-pass filtering the rectified signal into a modulation frequency signal fed to an input (36_) of the phase comparator (36b), in that the voltage controlled oscillator (38b) oscillates at a frequency multiple of the modulation frequency and in that the locking loop comprises a time base (39b) receiving the signal delivered by the oscillator (38b) for particularly deriving sampling control signals ($E_1$, $E_2$), a signal at the modulation frequency fed to the other input (36_+) of the phase comparator (36b), the signal at the clock frequency (H) and signals at carrier frequency necessary for the demodulation (31).

5. Device according to claim 4, characterized in that the phase comparator (36b) is changed to means (36a) for differentially processing and low-pass filtering the samples thereby feeding the modulation frequency signal (360) to the input of said low-pass filter (37a).

6. Device according to any one of claims 1 to 3, characterized in that the locking loop is changed to means (35c) for sampling and low-pass filtering the rectified signal (34), a local oscillator (38c) oscillating at a frequency (4/$\tau$) multiple of the modulation frequency 1/$\tau$), means (39c) receiving the local oscillator signal for deriving sampling control signals, means (37c) for low-pass filtering the sampled signal into the recovered carrier wave and a time base (39c') receiving the recovered carrier wave particularly to derive the clock signal (H) and signals at carrier a frequency necessary for the demodulation (31).

7. Device according to claim 4 or 6, characterized in that the sampling and low-pass filtering means (35b; 35c) comprises a band-pass filter (356, 357) with switched capacitances (357) preferably followed by a second-order band-pass filter (358) and a Schmitt flip-flop (359).

8. Device according to any of claims 1 to 3, characterized in that the locking loop is changed to a first band-pass filter (41) filtering the rectified signal into the recovered carrier wave, means (43) for frequency multiplying the modulation signal (S') by I into a signal at the frequency IP, a second band-pass filter (44) for filtering the IP-frequency signal, and a time base (39d) set in phase by the recovered carrier wave delivered by the first band-pass filter (41) for deriving from the IP-frequency signal particularly the signal at the clock frequency signal (H) and the signals at carrier wave frequency necessary for the demodulation (31).

0 123 587

## FIG.1

## FIG.3

## FIG.4

11

FIG.2

FIG.5

FIG.6

0 123 587

15

FIG.7

0 123 587

# FIG.8

# FIG.9